# EUROPÄISCHE PATENTSCHRIFT

(11) **EP 3 405 841 B1**
(45) Veröffentlichungstag und Bekanntmachung des Hinweises auf die Patenterteilung: **04.09.2019**
(21) Anmeldenummer: 17700419.9
(22) Anmeldetag: 13.01.2017
(51) Int. Cl.: G05B 19/042, B60K 37/06, B60W 10/30

(54) **ANPASSUNGSFÄHIGE BEDIENVORRICHTUNG FÜR EIN KRAFTFAHRZEUG**
ADAPTIVE OPERATOR CONTROL DEVICE FOR A MOTOR VEHICLE
DISPOSITIF DE COMMANDE ADAPTABLE POUR VÉHICULE AUTOMOBILE

(30) Priorität: 22.01.2016 DE 102016000626
(43) Veröffentlichungstag der Anmeldung: 28.11.2018
(73) Patentinhaber: Audi AG, 85045 Ingolstadt (DE)
(72) Erfinder: BOUAZIZ, Tahar, 85055 Ingolstadt (DE)
(86) Internationale Anmeldenummer: PCT/EP2017/050709
(87) Internationale Veröffentlichungsnummer: WO 2017/125326

(56) Entgegenhaltungen:
- WO-A1-2016/066258
- WO-A2-2009/147062
- DE-A1-102013 007 256
- DE-A1-102014 003 947
- US-A1- 2009 160 732

## Beschreibung

Die Erfindung betrifft eine Bedienvorrichtung für ein Kraftfahrzeug zum Bedienen zumindest eines Geräts. Die Bedienvorrichtung weist eine Steuereinrichtung und eine Erfassungseinrichtung auf. Dabei sind das zumindest eine Gerät und die Erfassungseinrichtung mit der Steuereinrichtung gekoppelt. Die Erfassungseinrichtung ist dazu eingerichtet, in einem Erfassungsbereich zumindest eine Person zu erfassen.

Damit ein Fahrer eines Kraftfahrzeugs während einer Fahrt, beispielsweise durch Kinder oder ein Baby auf einem Rücksitz, nicht abgelenkt wird, ist es möglich, den Rücksitz per Video zu überwachen. Dazu kann die Erfassungseinrichtung beispielsweise als Sitzbelegungssensor und das Gerät als Kamera ausgebildet sein. Befinden sich also beispielsweise Kinder oder ein Baby in einem Babysitz auf dem Rücksitz oder einer Rückbank des Kraftfahrzeugs, so kann dies durch den Sitzbelegungssensor erfasst werden. Der Sitzbelegungssensor kann daraufhin ein Erkennungssignal an die Steuereinrichtung übermitteln, welche beim Empfangen des Erkennungssignals die Kamera, welche bevorzugt auf den Rücksitz gerichtet ist, aktiviert. Die Kamera zeichnet dann das Geschehen auf dem Rücksitz auf und überträgt dieses an eine Anzeigeeinrichtung. Der Fahrer des Kraftwagens braucht sich damit während der Fahrt nicht umdrehen, um die Kinder oder das Baby auf dem Rücksitz zu sehen beziehungsweise das Geschehen zu überprüfen. Befindet sich beispielsweise das Baby in dem Babysitz auf dem Rücksitz, kann es sein, dass die Kamera zum Erfassen des Babys falsch eingestellt ist, da sie beispielsweise auf eine Kopflehne des Rücksitzes und nicht auf eine Sitzfläche des Rücksitzes gerichtet ist. Zum Einstellen des Kamera können an der Kamera oder der Anzeigeeinrichtung mehrere Bedienelemente vorgesehen sein. Um beispielsweise die Blickrichtung der Kamera zu ändern, damit der Fahrer das Baby sehen kann, muss der Fahrer eines aus vielen Bedienelementen zur Kameraeinstellung wählen, um die Blickrichtung einstellen zu können. Möchte der Fahrer nur eine Einstellung der Kamera ändern, sind die übrigen Bedienelemente überflüssig. Das Auswählen des "richtigen" Bedienelements ist mit einem erheblichen Aufwand verbunden und lenkt den Fahrer ebenfalls vom Verkehrsgeschehen während einer Fahrt ab.

In Abhängigkeit von dem Erfassungssignal des Sitzbelegungssensors kann auch anstelle einer im Kraftfahrzeug angeordneten Kamera ein anderes Gerät gesteuert werden.

Dazu schlägt die US 4 462 218 A1 als Gerät eine Klimaanlage vor, welche ebenfalls in Abhängigkeit von einer Sitzbelegung gesteuert wird. Gängige Klimaanlagen verteilen im Betrieb der Klimaanlage einen Luftstrom im Innenraum des Kraftfahrzeugs, welcher über Gebläseöffnungen der Klimaanlage in den Innenraum gelangt. Die Verteilung des Luftstroms im Innenraum des Kraftfahrzeugs wird in Abhängigkeit von einer Sitzbelegung im Kraftfahrzeug gesteuert. Dazu weist die Klimaanlage eine erste Klimaanlageneinrichtung und eine zweite Klimaanlageneinrichtung auf. Der Innenraum des Kraftfahrzeugs ist ferner in zwei Bereiche aufgeteilt, nämlich in einen Fahrerbereich und in einen Beifahrerbereich. Die erste Klimaanlageneinrichtung ist dem Fahrerbereich und die zweite Klimaanlageneinrichtung ist dem Beifahrerbereich zugeordnet. Wird nur ein Fahrer des Kraftfahrzeugs in dem Fahrerbereich durch den Sitzbelegungssensor erfasst, so wird die Klimaanlage durch eine Steuereinrichtung derart angesteuert, dass im Betrieb der Klimaanlage nur die erste Klimaanlageneinrichtung aktiviert ist. Der Nachteil an einem derartig gesteuerten Gerät ist, dass sobald der Sitzbelegungssensor etwas erfasst die Klimaanlage aktiviert wird, auch wenn beispielsweise der Fahrer das nicht möchte. Zur Geräteeinstellung sind je nach Gerätefunktionen Bedienelemente am Gerät vorgesehen. Weiß die das Gerät bedienende Person nicht, welches der Bedienelemente sie zu betätigen hat, um die Gerätefunktion zu ändern, muss sie aufwendig herumprobieren, bis sie das gewünschte Bedienelement gefunden hat. Auch das ist mit einem erheblichen Aufwand verbunden.

Die WO 2009/147062 A2 offenbart eine Bedienvorrichtung für ein Kraftfahrzeug gemäß dem Oberbegriff des Anspruchs 1.

Die US2009160732 offenbart eine Bedienvorrichtung, bei der ein Menübild mit Bedienungsobjekten angezeigt wird und bei der die Bedienungsobjekte in Abhängigkeit eines Fahrzustandes des Kraftfahrzeugs und in Abhängigkeit der erfassten Bedienperson freigeschaltet oder gesperrt werden.

Der Erfindung liegt die Aufgabe zugrunde eine Bedienvorrichtung derart weiterzuentwickeln, dass eine Gerätebedienung vereinfacht wird.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Erfindungsgemäß wird diese Aufgabe gelöst durch eine Bedienvorrichtung für ein Kraftfahrzeug zum Bedienen zumindest eines Geräts. Die Bedienvorrichtung weist eine Steuereinrichtung und eine Erfassungseinrichtung auf. Dabei sind das zumindest eine Gerät und die Erfassungseinrichtung mit der Steuereinrichtung gekoppelt. Die Erfassungseinrichtung ist dazu eingerichtet, in einem Erfassungsbereich zumindest eine Person zu erfassen. Die Bedienvorrichtung zeichnet sich dadurch aus, dass die Bedienvorrichtung eine Anzeigeeinrichtung umfasst, welche mit der Steuereinrichtung gekoppelt ist. Ferner ist die Steuereinrichtung dazu eingerichtet, auf einem Display der Anzeigeeinrichtung für das zumindest eine Gerät jeweils ein graphisches Bedienelement zum Bedienen des Geräts in Abhängigkeit von der in dem Erfassungsbereich zumindest einen erfassten Person einzublenden.

Dadurch ergibt sich der Vorteil, dass der erfassten Person eine Bedienoption eingeblendet wird, welche das jeweilige Gerät betrifft. Der erfassten Person werden also bevorzugt keine überflüssigen Bedienelemente zur Verfügung gestellt. Ferner wird das Display nicht mit graphischen Bedienelementen überladen und wirkt deutlich übersichtlicher. Dadurch wird die Person nicht überfordert.

Bei dem Gerät handelt es sich bevorzugt um ein Kraftfahrzeuggerät, also um ein Gerät, welches in dem Kraftfahrzeug angeordnet ist. Beispielsweise kann das Gerät ein Komfortgerät des Kraftfahrzeugs, wie beispielsweise eine Zonen-Klimaanlage und/oder eine Sitzheizung, sein. Bei dem Gerät kann es sich aber auch um eine Sonnenblende und/oder um einen Innen- oder Außenspiegel und/oder um ein Infotainmentsystem des Kraftfahrzeugs handeln. Mittels der Bedienvorrichtung können gleichzeitig mehrere Geräte, also mehr als ein Gerät, bedient werden. Entsprechend kann für jedes der mehreren Geräte ein graphisches Bedienelement eingeblendet werden. Im Folgenden wird in den Ausführungsformen aber der einfacheren Darstellung halber nur auf ein Gerät eingegangen, welches mit der Bedienvorrichtung bedient werden kann.

Mittels der Bedienvorrichtung kann also beispielsweise eine Zonen-Klimaanlage bedient werden. Um die Bedienung der Zonen-Klimaanlage zu vereinfachen, umfasst die Bedienvorrichtung die Erfassungseinrichtung. Die Erfassungseinrichtung ist beispielsweise als Kamera und/oder als Sitzbelegungssensor ausgebildet. Die Kamera nimmt bevorzugt einen Erfassungsbereich auf. Mit Erfassungsbereich ist beispielsweise ein Sichtfeld der Kamera gemeint. Die Erfassungseinrichtung kann alternativ oder zusätzlich einen weiteren Sensor aufweisen, welcher den Erfassungsbereich erfasst. Der weitere Sensor kann als Erfassungsbereich einen Innenraum des Kraftfahrzeugs erfassen.

Ferner umfasst die Bedienvorrichtung eine Anzeigeeinrichtung mit einem Display. Die Anzeigeeinrichtung ist bevorzugt als Touchscreen ausgebildet. Mit Display ist insbesondere eine Anzeigefläche oder ein Bildschirm des Touchscreens gemeint. Wird durch die Erfassungseinrichtung zumindest eine Person erfasst, so übermittelt die Erfassungseinrichtung bevorzugt ein Erfassungssignal an die Steuereinrichtung. Daraufhin kann die Steuereinrichtung die Anzeigeeinrichtung ansteuern. Schließlich wird auf dem Display der Anzeigeeinrichtung das graphische Bedienelement eingeblendet.

Eine Ausführungsform der Erfindung sieht vor, dass der Erfassungsbereich in einen Fahrerbereich und in einen Beifahrerbereich unterteilt sein kann.

Dazu sieht eine allgemeine Ausführungsform der Erfindung vor, dass der Erfassungsbereich in zumindest einen ersten Teilbereich und einen zweiten Teilbereich unterteilt ist. Handelt es sich beispielsweise bei dem Erfassungsbereich um einen Innenraum des Kraftfahrzeugs, so ist dieser in einen ersten und in einen zweiten Teilbereich unterteilt. Beispielsweise kann der Innenraum des Kraftfahrzeugs in Fahrzeuglängsrichtung unterteilt sein. Dabei kann bevorzugt der erste Teilbereich den Beifahrerbereich, also den Innenraumbereich auf der Beifahrerseite, darstellen. Der zweite Teilbereich kann bevorzugt den Fahrerbereich, also den Innenraumbereich auf der Fahrerseite, darstellen. Bevorzugt ist die Steuereinrichtung ferner dazu eingerichtet, in Abhängigkeit von einem Erfassen einer Person in dem ersten Teilbereich und unabhängig von einem Erfassen einer weiteren Person in dem zweiten Teilbereich das graphische Bedienelement auf dem Display einzublenden.

Befindet sich beispielsweise ein Fahrer im Fahrerbereich und steigt ein Beifahrer in das Kraftfahrzeug in den Beifahrerbereich, so wird für den Beifahrer auf dem Display ein dem Beifahrerbereich betreffendes graphisches Bedienelement des Geräts für den Beifahrer eingeblendet. Für den Fahrer im Fahrerbereich ist beispielsweise bereits schon das graphische Bedienelement für seinen Teilbereich auf dem Display eingeblendet. Steigt der Beifahrer wieder aus dem Kraftfahrzeug aus, wird das weitere graphische Bedienelement bevorzugt wieder ausgeblendet, da im ersten Teilbereich nun keine Person erfasst ist. Damit kann sich die Anzeige auf dem Display wieder auf ein graphisches Bedienelement für den Fahrer reduzieren. Entsprechend wird bevorzugt nur etwas eingeblendet, wenn eine Person erfasst wird und zwar unabhängig von der weiteren Person in dem zweiten Teilbereich.

In vorteilhafter Weise ist eine für den ersten Teilbereich vorgesehene erste Gerätefunktion des Geräts dem graphischen Bedienelement zugeordnet. Mit anderen Worten ist über das graphische Bedienelement eine erste Gerätefunktion des Geräts einstellbar, welche auf den ersten Teilbereich einwirkt. Die erfasste Person kann also bei einer Betätigung des graphischen Bedienelements eine erste Gerätefunktion des Geräts einstellen. Handelt es sich bei dem Gerät beispielsweise um eine Klimaanlage, so kann als Gerätefunktion beispielsweise eine Temperatur oder eine Gebläsestärke oder eine Luftstromrichtung für den ersten Teilbereich eingestellt werden. Dadurch ergibt sich der Vorteil, dass die erfasste Person bei der Bedienung des Geräts allein dadurch unterstützt wird, dass ihr nur das Bedienelement angezeigt wird, welches sie bedienen kann, um die Gerätefunktion zu steuern. Dadurch entsteht für die Person ein komfortables Benutzergefühl.

Eine weitere Ausführungsform der Erfindung sieht vor, dass die Steuereinrichtung dazu eingerichtet ist, für das zumindest eine Gerät jeweils ein weiteres graphisches Bedienelement zum Bedienen des Geräts bereitzustellen und das weitere Bedienelement in Abhängigkeit von einem Erfassen einer Person in dem zweiten Teilbereich auf dem Display einzublenden. Befindet sich also beispielsweise der Fahrer im zweiten Teilbereich und wird in dem zweiten Teilbereich durch die Erfassungseinrichtung erfasst, so kann anstelle des graphischen Bedienelements, welches dem ersten Teilbereich zugeordnet ist, ein weiteres graphisches Bedienelement auf dem Display angezeigt werden. Alternativ kann es auch vorgesehen sein, dass wenn sich im ersten und im zweiten Teilbereich jeweils eine Person befindet, auf dem Display gleichzeitig das Bedienelement und das weitere Bedienelement angezeigt werden kann. Alternativ kann die Einblendung der jeweiligen graphischen Bedienelemente dynamisch angepasst werden. Befindet sich zunächst eine Person in dem ersten Teilbereich und eine weitere Person in dem zweiten Teilbereich, so können beide graphischen Bedienelemente - das graphische Bedienelement und das weitere graphische Bedienelement - auf dem Display angezeigt werden. Verlässt eine der beiden Personen ihren Teilbereich, so kann das jeweilige Bedienelement, welches dem jeweiligen Teilbereich zugeordnet ist, aus dem sich die Person entfernt, ausgeblendet werden. Beispielsweise kann ein Beifahrer aus dem Kraftfahrzeug aussteigen und verlässt somit den ersten Teilbereich. Daraufhin würde das graphische Bedienelement, welches dem ersten Teilbereich zugeordnet ist, aus dem Display verschwinden. In diesem Fall kann dann nur das graphische Bedienelement auf dem Display angezeigt werden. Steigt der Beifahrer anschließend wieder in das Kraftfahrzeug ein und wird er durch die Erfassungseinrichtung in dem ersten Teilbereich erfasst, so kann das graphische Bedienelement wieder eingeblendet werden. Dadurch wird nur das auf dem Display angezeigt, was zur Geräteeinstellung für die jeweilige Person relevant ist.

In vorteilhafter Weise ist eine für den zweiten Teilbereich vorgesehene zweite Gerätefunktion des Geräts dem weiteren graphischen Bedienelement zugeordnet. Mit anderen Worten ist über das weitere graphische Bedienelement eine zweite Gerätefunktion des Geräts einstellbar, welche auf den zweiten Teilbereich einwirkt. Die erfasste Person kann also bei einer Betätigung des weiteren graphischen Bedienelements eine zweite Gerätefunktion des Geräts einstellen.

Eine Weiterbildung sieht vor, dass die Steuereinrichtung dazu eingerichtet ist, zusätzlich zu dem graphischen Bedienelement ein Wechselelement auf dem Display einzublenden, und bei einer an dem zusätzlichen Bedienelement erfassten Bedienhandlung unabhängig von der erfassten Person zwischen einer Anzeige sowohl des graphischen Bedienelements als auch des weiteren graphischen Bedienelements zu wechseln. Auch wenn sich beispielsweise eine Person in dem ersten Teilbereich befindet und der Person auf dem Display das graphische Bedienelement angezeigt wird, welches dem ersten Teilbereich zugeordnet ist, so kann sich die Person dennoch durch eine Betätigung des Wechselelements das weitere Bedienelement anzeigen lassen und damit eine zweite Gerätefunktion des Geräts einstellen.

Zu der Erfindung gehört auch ein Kraftfahrzeug. Das erfindungsgemäße Kraftfahrzeug weist eine Ausführungsform der erfindungsgemäßen Bedienvorrichtung auf. Die Bedienvorrichtung ist zum Bedienen eines Geräts mit diesem Gerät gekoppelt. Bei dem Gerät handelt es sich bevorzugt um ein Kraftfahrzeuggerät, also um das Gerät, welches in dem Kraftfahrzeug angeordnet ist. Beispielsweise kann mit Gerät ein Komfortgerät, wie beispielsweise eine Zonen-Klimaanlage und/oder eine Sitzheizung, gemeint sein. Bei dem Gerät kann es sich aber auch bevorzugt um eine motorisch verfahrbare Sonnenblende und/oder um einen Innen- oder Außenspiegel des Kraftfahrzeugs handeln.

Zu der Erfindung gehört ferner ein Verfahren zum Betreiben einer Bedienvorrichtung zum Bedienen zumindest eines Geräts. Die Bedienvorrichtung weist eine Steuereinrichtung und eine Erfassungseinrichtung auf. Dabei ist die Steuereinrichtung mit dem zumindest einen Gerät und der Erfassungseinrichtung gekoppelt. Ferner umfasst die Bedienvorrichtung eine Anzeigeeinrichtung, welche mit der Steuereinrichtung gekoppelt ist. Bei dem Verfahren wird zunächst zumindest eine Person in einem Erfassungsbereich mittels der Erfassungseinrichtung erfasst. Schließlich wird jeweils ein graphisches Bedienelement zum Bedienen des Geräts auf einem Display der Anzeigeeinrichtung für das zumindest eine Gerät in Abhängigkeit von der in dem Erfassungsbereich zumindest einen erfassten Person eingeblendet.

Die mit Bezug auf die erfindungsgemäße Bedienvorrichtung vorgestellten bevorzugten Ausführungsformen sowie deren Vorteile gelten entsprechend für das erfindungsgemäße Kraftfahrzeug sowie das erfindungsgemäße Verfahren.

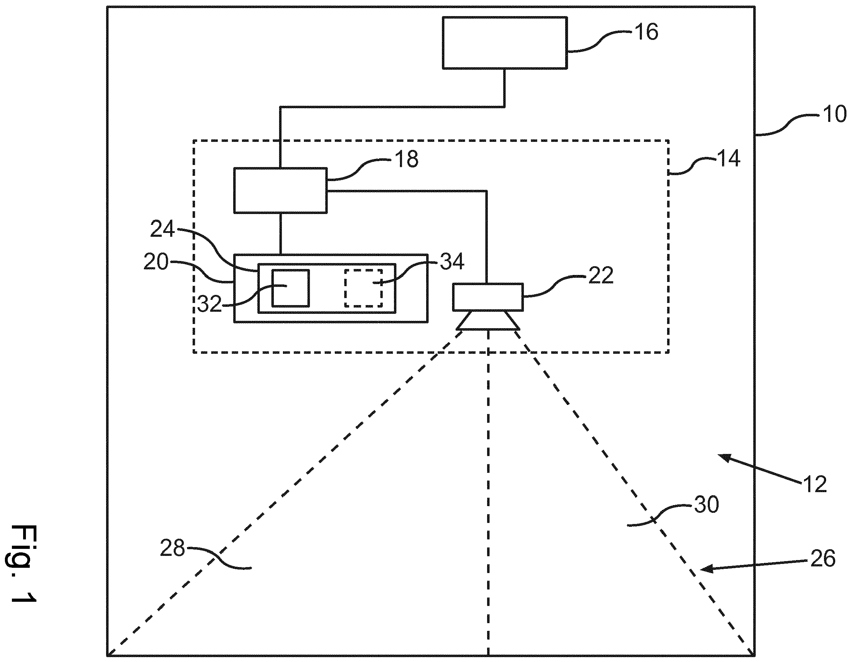

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich beispielsweise um einen Kraftwagen, insbesondere einen Personenkraftwagen, handeln kann. In der Figur ist ein Innenraum 12 des Kraftfahrzeugs 10 in einer Draufsicht gezeigt. In dem Innenraum 12 ist eine Bedienvorrichtung 14 zum Bedienen eines Geräts 16 angeordnet. Die Bedienvorrichtung 14 umfasst eine Steuereinrichtung 18, eine Anzeigeeinrichtung 20 und eine Erfassungseinrichtung 22. Die Anzeigeeinrichtung 20 selbst weist ein Display 24 auf.

Das Gerät 16, die Anzeigeeinrichtung 20 und die Erfassungseinrichtung 22 sind mit der Steuereinrichtung 18 gekoppelt. Mit "gekoppelt" ist insbesondere gemeint, dass das Gerät 16, die Anzeigeeinrichtung 20 und die Erfassungseinrichtung 22 signaltechnisch mit der Steuereinrichtung 18 verbunden sind. In der Figur ist nur ein Gerät 16 mit der Steuereinrichtung 18 gekoppelt. Bevorzugt können auch mehrere Geräte mit der Steuereinrichtung 18 gekoppelt sein. Entsprechend können auch mehrere Geräte mit der Bedienvorrichtung 14 bedient werden. Bei dem Gerät 16 kann es sich beispielsweise um eine Zonen-Klimaanlage für den Innenraum 12 des Kraftfahrzeugs 10 handeln. Bei dem Gerät 16 kann es sich auch beispielsweise um eine Sitzheizung handeln. Alternativ kann es sich bei dem Gerät 16 auch um ein Infotainmentsystem des Kraftfahrzeugs 10 handeln. In dem Ausführungsbeispiel wird im Folgenden auf ein Gerät 16 verwiesen.

Die Erfassungseinrichtung 22 ist bevorzugt als Kamera ausgebildet. Beispielsweise kann die Kamera im Kraftfahrzeug 10 an einem Dachhimmel des Kraftfahrzeugs 10 angeordnet sein. Bevorzugt ist die Kamera in Fahrzeughochrichtung oberhalb einer Mittelkonsole des Kraftfahrzeugs 10 angeordnet. Bevorzugt ist die Anzeigeeinrichtung 20 an einer Mittelkonsole des Kraftfahrzeugs 10 angeordnet.

Wie der Figur zu entnehmen ist, spannt die Kamera einen Erfassungsbereich 26 auf. Bei dem Erfassungsbereich 26 handelt es sich beispielsweise um ein Sichtfeld der Kamera. Der Erfassungsbereich 26 ist in der Figur aufgeteilt. Der Erfassungsbereich 26 kann in zwei oder mehr Bereiche aufgeteilt sein. In der Figur ist der Erfassungsbereich 26 in einen ersten Teilbereich 28 und in einen zweiten Teilbereich 30 aufgeteilt. Die Kamera ist dazu eingerichtet, zumindest eine Person in dem Erfassungsbereich 26 zu erfassen. Ferner ist die Kamera dazu eingerichtet, beim Erfassen einer Person in einem Teilbereich 28, 30 ein Erfassungssignal an die Steuereinrichtung 18 zu übermitteln. Die Steuereinrichtung 18 ist daraufhin dazu eingerichtet, auf dem Display 24 der Anzeigeeinrichtung 20 für das Gerät 16 in Abhängigkeit von der in dem Erfassungsbereich 26 erfassten Person einzublenden. Sind mehrere Geräte an die Steuereinrichtung 18 gekoppelt so können mehrere graphische Bedienelemente, welche jeweils einem Gerät 16 zugeordnet sind, auf dem Display 24 eingeblendet werden.

Die Anzeigeeinrichtung 20 der Bedienvorrichtung 14 ist bevorzugt als Touchscreen ausgebildet. Das Display 24 oder die Anzeigefläche der Anzeigeeinrichtung 20 ist bevorzugt berührungssensitiv ausgebildet.

Die Steuereinrichtung 18 der Bedienvorrichtung 14 ist dazu eingerichtet, auf dem Display 24 ein graphisches Bedienelement 32 für das Gerät 16 anzuzeigen oder darzustellen. Ferner ist die Steuereinrichtung 18 der Bedienvorrichtung 14 dazu eingerichtet, auf dem Display 24 ein weiteres graphisches Bedienelement 34 für das Gerät 16 anzuzeigen oder darzustellen. Bei einer Berührung des Displays 24 kann eine Berührung des Displays 24 erfasst oder erkannt werden. Die Berührung kann beispielsweise eine Person mit einem Finger einer Hand ausführen. Das berührungssensitive Display 24 kann beispielsweise auf der Grundlage einer Sensormatrix gebildet sein. Die Sensoren der Sensormatrix können beispielsweise jeweils als kapazitiver Sensor ausgestaltet sein.

Dem jeweiligen graphischen Bedienelement 32, 34 ist eine Gerätefunktion des Geräts 16 zugeordnet. So ist beispielsweise dem graphischen Bedienelement 32 eine erste Gerätefunktion und dem weiteren graphischen Bedienelement 34 eine zweite Gerätefunktion zugeordnet.

Wird durch eine (nicht dargestellte) Person eine Bedienhandlung, beispielsweise eine Berührung, an dem jeweiligen graphischen Bedienelement 32, 34 erfasst, so kann durch die Person eine dem betätigten Bedienelement 32, 34 zugeteilte Gerätefunktion ausgelöst werden.

Zur besseren Orientierung für die Person, bei der Bedienung der Bedienvorrichtung 14 beziehungsweise bei der Betätigung des jeweiligen graphischen Bedienelements 32, 34, kann auf dem Display 24 zusätzlich ein Symbol eingeblendet werden, welches das zu bedienende Gerät 16 assoziiert. Handelt es sich bei dem Gerät 16 beispielsweise um eine Sitzheizung, so kann insbesondere neben dem jeweiligen Bedienelement 32, 34 beispielsweise ein Sitz als Symbol eingeblendet werden. Anstelle, dass das Symbol mit dem Gerät 16 assoziiert ist, kann das Symbol auch eingeblendet werden, wenn eine Person in einem der Teilbereiche 28, 30 erfasst wird. Wird beispielsweise eine Person in dem ersten Teilbereich 28 erfasst, so kann neben dem graphischen Bedienelement 32 ein Sitz als Symbol für die erfasste Person eingeblendet werden.

Zur Anzeige der graphischen Bedienelemente 32, 34 liegen mehrere Szenarien vor.

In einem ersten Szenario wird in dem ersten Teilbereich 28 eine Person (in Figur nicht gezeigt) erfasst. Daraufhin übermittelt die Kamera, also die Erfassungseinrichtung 22, ein Erfassungssignal an die Steuereinrichtung 18. Diese wiederum blendet dadurch das graphische Bedienelement 32 auf dem Display 24 der Anzeigeeinrichtung 20 ein. Die erfasste Person kann dann eine erste Gerätefunktion des Geräts 16 auslösen, indem sie das graphische Bedienelement 32 betätigt.

In einem zweiten Szenario wird die Person in dem zweiten Teilbereich 30 mittels der Kamera erfasst. Diese übermittelt daraufhin ein weiteres Erfassungssignal an die Steuereinrichtung 18. Diese blendet dann anstelle des graphischen Bedienelements 32 das weitere graphische Bedienelement 34 auf dem Display 24 der Anzeigeeinrichtung 20 ein. Die erfasste Person kann dann eine zweite Gerätefunktion des Geräts 16 auslösen, indem sie das graphische Bedienelement 32 betätigt.

In einem dritten Szenario befindet sich eine Person in dem ersten Teilbereich 28 und eine weitere (nicht dargestellte) Person in dem zweiten Teilbereich 30. Die Kamera erfasst nun beide Personen in den beiden Teilbereichen 28, 30 und übermittelt ein Erfassungssignal für die Person in dem ersten Teilbereich 28 und ein weiteres Erfassungssignal für die weitere Person in dem zweiten Teilbereich 30 an die Steuereinrichtung 18. Diese wiederum blendet daraufhin das graphische Bedienelement 32 und das weitere graphische Bedienelement 34 auf dem Display 24 der Anzeigeeinrichtung 20 ein. Beispielsweise können die beiden graphischen Bedienelemente 32, 34 senkrecht zu einer Fahrzeuglängsrichtung nebeneinander auf dem Display 24 angeordnet sein.

In einem vierten Szenario wird, wie in dem ersten Szenario, in dem ersten Teilbereich 28 die Person erfasst. Daraufhin übermittelt die Kamera das Erfassungssignal an die Steuereinrichtung 18. Diese wiederum blendet dadurch das graphische Bedienelement 32 auf dem Display 24 der Anzeigeeinrichtung 20 ein. Zusätzlich zu dem graphischen Bedienelement 32 kann ein Wechselelement auf dem Display 24 eingeblendet werden. Beispielsweise kann das Wechselelement im Vergleich zu dem angezeigten graphischen Bedienelement 32 verkleinert dargestellt sein. Beispielsweise kann das graphische Wechselelement in einem Randbereich auf dem Displays 24 angeordnet sein. Das Wechselelement kann graphisch das weitere graphische Bedienelement 34 anzeigen.

So kann die Person, auch wenn sich keine Person in dem zweiten Teilbereich 30 befindet, zwischen der Anzeige des graphischen Bedienelements 32 und der des weiteren Bedienelements 34 wechseln. Das ist beispielsweise notwendig, wenn sich in dem zweiten Teilbereich 30 zur Anzeige des weiteren Bedienelements 34 keine Person befindet. Somit kann die Person sich auch das weitere Bedienelement 34 anzeigen lassen und die zweite Gerätefunktion bei einer Betätigung des weiteren Bedienelements 34 auslösen oder einstellen.

Anstelle, dass ein graphisches Wechselelement auf dem Display 24 eingeblendet wird, kann, wenn nur eine Person in dem jeweiligen Teilbereich 28, 30 erfasst wird, dennoch das graphische Bedienelement der Anzeigeeinrichtung 20 hinterlegt sein, zu welchem Teilbereich 28, 30 keine Person erfasst wurde. Die Person, die dann die Bedienvorrichtung 14 bedient, kann dann beispielsweise durch eine vorbestimmte Bedienhandlung, wie beispielsweise einer Wischbewegung über eine Oberfläche des Displays 24, zwischen den jeweiligen Bedienelementen 32, 34 wechseln.

Insgesamt kann somit bei Erkennung, dass sich ein Beifahrer im Kraftfahrzeug befindet, eine Klimaanlagenanzeige von einer Zone auf Zweizonenklimatisierung umgestellt werden. Dadurch sind keine umständlichen Einstellungen mehr vorzunehmen und es wird ein komfortables Benutzergefühl geschaffen. Die Detektion des Fahrers oder des Beifahrers kann beispielsweise durch eine Kamera erfolgen.

## Patentansprüche

1. Bedienvorrichtung (14) für ein Kraftfahrzeug (10) zum Bedienen zumindest eines Geräts (16), umfassend:
- eine Steuereinrichtung (18), welche mit dem zumindest einen Gerät (16) gekoppelt ist und
- eine Erfassungseinrichtung (22), welche mit der Steuereinrichtung (18) gekoppelt ist und dazu eingerichtet ist, in einem Erfassungsbereich (26) zumindest eine Person zu erfassen, wobei
- die Bedienvorrichtung (14) eine Anzeigeeinrichtung (20) umfasst, welche mit der Steuereinrichtung (18) gekoppelt ist,
**dadurch gekennzeichnet, dass**
- die Steuereinrichtung (18) dazu eingerichtet ist, auf einem Display (24) der Anzeigeeinrichtung (20) für das zumindest eine Gerät (16) jeweils ein graphisches Bedienelement (32, 34) zum Bedienen des Geräts (16) ein- und auszublenden, wobei
- der Erfassungsbereich (26) in zumindest einen ersten Teilbereich (28) und einen zweiten Teilbereich (30) unterteilt ist, wobei
- die Erfassungseinrichtung (22) dazu eingerichtet ist, zu erfassen, ob sich eine Person in dem ersten Teilbereich (28) und/oder eine weitere Person in dem zweiten Teilbereich (30) befindet, wobei
- die Steuereinrichtung (18) dazu eingerichtet ist, in Abhängigkeit von der in dem jeweiligen Teilbereich (28, 30) des Erfassungsbereichs (26) erfassten zumindest einen Person jeweils ein graphisches Bedienelement (32, 34) zum Bedienen des Geräts (16) einzublenden, wobei dem ersten Teilbereich (28) ein graphisches Bedienelement (32) und dem zweiten Teilbereich (30) ein weiteres graphisches Bedienelement (34) zugeordnet ist, wobei
- die Steuereinrichtung (18) ferner dazu eingerichtet ist, das jeweilige graphische Bedienelement (32, 34) auszublenden, wenn die jeweils erfasste Person den jeweiligen Teilbereich (28, 30) verlässt.

2. Bedienvorrichtung (14) nach Anspruch 1,
**dadurch gekennzeichnet, dass**
eine für den ersten Teilbereich (28) vorgesehene erste Gerätefunktion des Geräts (16) dem graphischen Bedienelement (32) zugeordnet ist.

3. Bedienvorrichtung (14) nach einem der vorhergehenden Ansprüche,
**dadurch gekennzeichnet, dass**
eine für den zweiten Teilbereich (30) vorgesehene zweite Gerätefunktion des Geräts (16) dem weiteren graphischen Bedienelement (34) zugeordnet ist.

4. Bedienvorrichtung (14) nach Anspruch 3,
**dadurch gekennzeichnet, dass**
die Steuereinrichtung (18) dazu eingerichtet ist, zusätzlich zu dem graphischen Bedienelement (32, 34) ein Wechselelement auf dem Display (24) einzublenden, und bei einer an dem zusätzlichen Bedienelement erfassten Bedienhandlung unabhängig von der erfassten Person zwischen einer Anzeige des graphischen Bedienelements (32) und des weiteren graphischen Bedienelements (34) zu wechseln.

5. Bedienvorrichtung (14) nach einem der vorhergehenden Ansprüche,
**dadurch gekennzeichnet, dass**
die Anzeigeeinrichtung (20) als Touchscreen ausgebildet ist.

6. Kraftfahrzeug (10) mit einer Bedienvorrichtung (14) nach einem der vorhergehenden Ansprüche.

7. Kraftfahrzeug (10) nach Anspruch 6,
**dadurch gekennzeichnet, dass**
das zumindest eine Gerät (16) als Zonenklimaanlage und/oder als Sitzheizung ausgebildet ist.

8. Verfahren zum Betreiben einer Bedienvorrichtung (14) zum Bedienen zumindest eines Geräts (16) mit
- einer Steuereinrichtung (18), welche mit dem zumindest einen Gerät (16) gekoppelt ist und
- einer Erfassungseinrichtung (22), welche mit der Steuereinrichtung (18) gekoppelt ist, und
- einer Anzeigeeinrichtung (20), welche mit der Steuereinrichtung (18) gekoppelt ist, umfassend die Schritte:
- Erfassen zumindest einer Person in einem Erfassungsbereich (26) mittels der Erfassungseinrichtung (22), wobei der Erfassungsbereich (26) in einen ersten Teilbereich (28) und einen zweiten Teilbereich (30) unterteilt ist,
- Erfassen, ob sich eine Person in dem ersten Teilbereich (28) und/oder eine weitere Person in dem zweiten Teilbereich (30) befindet,
- Einblenden jeweils eines graphischen Bedienelements (32, 34) zum Bedienen des zumindest einen Geräts (16) auf einem Display (24) der Anzeigeeinrichtung (20) für das zumindest eine Gerät (16) in Abhängigkeit von der in dem jeweiligen Teilbereich (28, 30) des Erfassungsbereichs (26) erfassten Person, wobei dem ersten Teilbereich (28) ein graphisches Bedienelement (32) und dem zweiten Teilbereich (30) ein weiteres graphisches Bedienelement (34) zugeordnet ist, und
- Ausblenden des jeweiligen graphischen Bedienelements (32, 34) zum Bedienen des zumindest einen Geräts (16), wenn die Erfassungseinrichtung erfasst, dass die jeweilige erfasste Person den jeweiligen Teilbereich (28, 30) verlässt.

## Claims

1. Operator control apparatus (14) for a motor vehicle (10) for controlling at least one device (16), comprising:
- A control apparatus (18), which is coupled with the at least one device (16) and
- a detection apparatus (22) which is coupled with a control apparatus (18) and is configured to detect at least one person in a detection range (26), wherein
- the operator control apparatus (14) comprises a display apparatus (20), which is coupled with the control apparatus (18),
**characterised in that**
- the control apparatus (18) is configured to show or hide on a display (24) of the display apparatus (20) for the at least one device (16) in each case a graphic operator control element (32, 34) for controlling the device (16), wherein
- the detection range (26) is divided into at least one first sub-region (28) and a second sub-region (30), wherein
- the detection apparatus (22) is configured to detect whether a person is located in the first sub-region (28) and/or a further person is located in the second sub-region (30), wherein
- the control apparatus (18) is configured to show in each case a graphic operator control element (32, 34) for controlling the device (16) as a function of the at least one person detected in the respective sub-region (28, 30) of the detection region (26), wherein a graphic operator control element (32) is assigned to the first sub-region (28) and a further graphic operator control element (34) is assigned to the second sub-region (30) wherein
- the control apparatus (18) is further configured to hide the respective graphic operator control element (32, 34), if the person detected in each case leaves the respective sub-region (28, 30).

2. Operator control apparatus (14) according to Claim 1, **characterised in that** a first device function of the device (16) provided for the first sub-region (28) is assigned to the graphic operator control element (32).

3. Operator control apparatus (14) according to any one of the preceding claims, **characterised in that** a second device function of the device (16) provided for the second sub-region (30) is assigned to the further graphic operator control element (34).

4. Operator control apparatus (14) according to claim 3, **characterised in that** the control apparatus (18) is configured to show in addition to the graphic operator control element (32, 34) a change element on the display (24), and in the case of an operator control action detected on the additional operator control element to change between a display of the graphic operator control element (32) and of the further graphic operator control element (34) independent of the detected person.

5. Operator control apparatus (14) according to any one of the preceding claims **characterised in that** the display apparatus (20) is designed as a touchscreen.

6. Motor vehicle (10) with an operator control apparatus (14) according to any one of the preceding claims.

7. Motor vehicle (10) according to claim 6, **characterised in that** the at least one device (16) is designed as a zone air conditioner and/or as a seat heater.

8. Method for operating an operator control apparatus (14) for controlling at least one device (16), having
- a control apparatus (18), which is coupled with the at least one device (16) and
- a detection apparatus (22) which is coupled with a control apparatus (18), and
- a display apparatus (20), which is coupled with the control apparatus (18), comprising the steps:
- Detect at least one person in a detection region (26) by means of the detection apparatus (22), wherein the detection region (26) is divided into a first sub-region (28) and a second sub-region (30),
- Detect whether a person is located in the first sub-region (28) and/or a further person is located in the second sub-region (30),
- Show in each case a graphic operator control element (32, 34) for controlling the at least one device (16) on a display (24) of the display apparatus (20) for the at least one device (16) as a function of the person detected in the respective sub-region (28, 30 of the detection region (26), wherein a graphic operator control element (32) is assigned to the first sub-region (28) and a further graphic operator control element (34) is assigned to the second sub-region (30), and
- Hide the respective graphic operator control element (32, 34) for controlling the at least one device (16), if the detection apparatus detects, that the respective detected person leaves the respective sub-region (28, 30).

## Revendications

1. Dispositif d'utilisation (14) pour un véhicule automobile (10) servant à utiliser au moins un appareil (16), comprenant :
- un dispositif de commande (18), lequel est couplé à l'au moins un appareil (16) et
- un dispositif de détection (22), lequel est couplé au dispositif de commande (18) et est mis au point pour détecter au moins une personne dans une zone de détection (26), dans lequel
- le dispositif d'utilisation (14) comprend un dispositif d'affichage (20), lequel est couplé au dispositif de commande (18),
**caractérisé en ce que**
- le dispositif de commande (18) est mis au point pour faire apparaître et masquer sur un écran (24) du dispositif d'affichage (20) pour l'au moins un appareil (16) respectivement un élément d'utilisation (32, 34) graphique servant à utiliser l'appareil (16), dans lequel
- la zone de détection (26) est divisée en au moins une première zone partielle (28) et une deuxième zone partielle (30), dans lequel
- le dispositif de détection (22) est mis au point pour détecter si une personne se trouve dans la première zone partielle (28) et/ou si une autre personne se trouve dans la deuxième zone partielle (30), dans lequel
- le dispositif de commande (18) est mis au point pour faire apparaître, en fonction de l'au moins une personne détectée dans la zone partielle (28, 30) respective de la zone de détection (26), respectivement un élément d'utilisation (32, 34) graphique servant à utiliser l'appareil (16), dans lequel un élément d'utilisation (32) graphique est associé à la première zone partielle (28) et un autre élément d'utilisation (34) graphique, à la deuxième zone partielle (30), dans lequel
- le dispositif de commande (18) est mis au point en outre pour masquer l'élément d'utilisation (32, 34) graphique respectif quand la personne respectivement détectée quitte la zone partielle (28, 30) respective.

2. Dispositif d'utilisation (14) selon la revendication 1,
**caractérisé en ce que**
une première fonction d'appareil, prévue pour la première zone partielle (28), de l'appareil (16) est associée à l'élément d'utilisation (32) graphique.

3. Dispositif d'utilisation (14) selon l'une quelconque des revendications précédentes, **caractérisé en ce que**
une deuxième fonction d'appareil, prévue pour la deuxième zone partielle (30), de l'appareil (16) est associée à l'autre élément d'utilisation (34) graphique.

4. Dispositif d'utilisation (14) selon la revendication 3,
**caractérisé en ce que**
le dispositif de commande (18) est mis au point pour faire apparaître, en plus de l'élément d'utilisation (32, 34) graphique, un élément de changement sur l'écran (24) et pour changer, dans le cas d'une manipulation détectée au niveau de l'élément d'utilisation supplémentaire, indépendamment de la personne détectée, entre un affichage de l'élément d'utilisation (32) graphique et celui de l'autre élément d'utilisation (34) graphique.

5. Dispositif d'utilisation (14) selon l'une quelconque des revendications précédentes,
**caractérisé en ce que**
le dispositif d'affichage (20) est réalisé en tant qu'écran tactile.

6. Véhicule automobile (10) avec un dispositif d'utilisation (14) selon l'une quelconque des revendications précédentes.

7. Véhicule automobile (10) selon la revendication 6,
**caractérisé en ce que**
l'au moins un appareil (16) est réalisé en tant que climatisation à zones et/ou en tant que chauffage de siège.

8. Procédé servant à faire fonctionner un dispositif d'utilisation (14) servant à utiliser au moins un appareil (16) avec
- un dispositif de commande (18), lequel est couplé à l'au moins un appareil (16) et
- un dispositif de détection (22), lequel est couplé au dispositif de commande (18), et
- un dispositif d'affichage (20), lequel est couplé au dispositif de commande (18), comprenant les étapes suivantes :
- la détection d'au moins une personne dans une zone de détection (26) au moyen du dispositif de détection (22), dans lequel la zone de détection (26) est divisée en une première zone partielle (28) et en une deuxième zone partielle (30),
- le fait de détecter si une personne se trouve dans la première zone partielle (28) et/ou une autre personne, dans la deuxième zone partielle (30),
- le fait de faire apparaître respectivement un élément d'utilisation (32, 34) graphique servant à utiliser l'au moins un appareil (16) sur un écran (24) du dispositif d'affichage (20) pour l'au moins un appareil (16) en fonction de la personne détectée dans la zone partielle (28, 30) respective de la zone de détection (26), dans lequel un élément d'utilisation (32) graphique est associé à la première zone partielle (28) et un autre élément d'utilisation (34) graphique, à la deuxième zone d'utilisation (30), et
- le masquage de l'élément d'utilisation (32, 34) graphique respectif servant à utiliser l'au moins un appareil (16) quand le dispositif de détection détecte que la personne détectée respective quitte la zone partielle (28, 30) respective.
